# EUROPEAN PATENT APPLICATION

(11) **EP 4 603 700 A1**
(43) Date of publication of application: **20.08.2025**
(21) Application number: 24157641.2
(22) Date of filing: 14.02.2024
(51) Int. Cl.: F03D 80/50

(54) **SUSPENDED PLATFORM SYSTEMS**

(71) Applicant: LM Wind Power A/S, 6000 Kolding (DK)
(72) Inventor: ROBERTS, David, OTTAWA, K1J 9L8 (CA); KADAM, Radhika, 6000 KOLDING (DK); RONDEAU, Louis, GREENVILLE, 29615 (US)
(74) Representative: ZBM Patents - Zea, Barlocci & Markvardsen

(57) **Abstract**

In a first aspect, a suspended platform system for post-moulding operations on a wind turbine blade is provided. The system comprises a suspended working platform to hold a user, a driving system for moving the working platform, and a control unit to prevent a distance between the working platform and a surface of the wind turbine blade from being less than a safety distance threshold. In a further aspect, a method is provided. In yet a further aspect, a wind turbine blade post-moulding operation system is provided.

## Description

The present disclosure relates to suspended platform systems, wind turbine blade post-moulding operation systems, and methods.

### BACKGROUND

Modern wind turbines are commonly used to supply electricity to the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blade manufacturing may include several operations or stages, such as moulding. Post-moulding operations may be performed after moulding in a manufacturing plant. Wind turbine blades may be moulded using vacuum-assisted resin transfer moulding (VARTM). Post-moulding operations may comprise, for instance, installing aerodynamic devices or add-on features, repairment of the blade including grinding or sanding, scanning the wind turbine blade and/or finishing operations such as painting the wind turbine blade.

Scaffolds are used to provide work platforms for the operators to access, at least, the upper portions of the blade. However, these scaffolds are disassembled to accommodate the different cross-sections of the wind turbine blade and to allow the rotation of the blade.

Furthermore, scaffolds may be set up and disassembled for each new blade to perform post-moulding operations. These tasks are repeated each time a new wind turbine blade is placed to perform post-moulding operations. Assembling and disassembling scaffolds may generally involve longer manufacturing times and may represent safety hazards. Moving the scaffolds towards or away from the blade may also involve safety hazards.

In addition, mounting the scaffolds around the blade generally requires a relatively great floor area of the manufacturing plant.

The present disclosure provides examples of assemblies, systems, and methods that at least partially resolve some of the aforementioned disadvantages.

### SUMMARY

According to a first aspect of the present disclosure, there is provided a suspended platform system for post-moulding operations on a wind turbine blade. The suspended platform system comprises cables configured to be attached to a structure, and a working platform to hold a user, wherein the working platform is suspended by the cables from the structure. The suspended platform system comprises a driving system for moving the working platform relative to the structure. Furthermore, the suspended platform system comprises a control unit configured to control a movement of the working platform towards a post-moulding position to prevent a distance between the working platform and a surface of the wind turbine blade from being less than a safety distance threshold.

Controlling the movement of the working platform may comprise moving the working platform and/or preventing movement of the working platform.

According to this aspect, the suspended platform system may be held from the structure. The working platform may be easily moved up or down or sideways to perform post-moulding operations on the wind turbine blade.

Therefore, the suspended working platform may be used instead of scaffolds. Consequently, the assembling and dismantling tasks of the scaffolds may be avoided. This may also mean that the manufacture of the wind turbine blade may be faster and more economical. Safety risks related to the use of scaffolds, e.g. repeating assembling/dissembling and/or moving towards/away from the blade, may thus be minimized.

Moreover, as the platform system is suspended from the structure, the working platform may not take up floor space. This may allow performing post-moulding operations on the wind turbine blade while the wind turbine blade is moving. For example, the blade may be moved along a direction substantially parallel to the spanwise direction while post-moulding operations are performed. The suspended platform system may thus allow increasing the versatility of post-moulding systems.

Additionally, the working platform is allowed to move when the distance between the working platform and a surface of the wind turbine blade is equal to or greater than a safety distance threshold. The movement of the working platform is thus restricted to at least maintaining a safety distance threshold with the blade. Therefore, the risk of the working platform impacting the wind turbine blade when the working platform moves relative to the wind turbine blade may be minimized.

According to a second aspect of the present disclosure, there is provided a method that comprises providing a suspended platform system according to any of the examples disclosed herein. The method comprises moving the working platform to a post-moulding operation position while a distance between the working platform and a surface of a wind turbine blade is equal to or greater than a safety distance threshold. Furthermore, the method comprises performing the post-moulding operation on the wind turbine blade while the working platform is in the post-moulding operation position.

Advantages derived from this aspect may be similar to those mentioned regarding the previous aspect.

According to a third aspect of the present disclosure, there is provided a wind turbine blade post-moulding operation system. The wind turbine blade post-moulding operation system comprises a suspended platform system according to any of the examples disclosed herein. Moreover, the wind turbine blade post-moulding operation system comprises a blade support to support the wind turbine blade.

Advantages derived from this aspect may be similar to those mentioned regarding the previous aspects.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a blade root portion of a wind turbine blade according to one example of the present disclosure;
Figure 3 shows a cross-sectional view of a wind turbine blade according to one example of the present disclosure;
Figure 4 schematically shows a perspective view of a suspended platform system according to one example of the disclosure;
Figure 5 shows a perspective view of a working platform according to an example of the disclosure;
Figure 6 schematically illustrates a perspective view of a driving system for moving the working platform according to one example of the disclosure;
Figure 7 schematically illustrates a perspective view of a driving system for moving the working platform according to a further example of the disclosure;
Figure 8 schematically illustrates a front view of a suspended platform system in a position related to a wind turbine blade according to one example of the disclosure;
Figure 9 schematically illustrates a front view of a suspended platform system in a further position related to a wind turbine blade according to a further example of the disclosure;
Figure 10 schematically illustrates a front view of a suspended platform system in yet a further position related to a wind turbine blade according to a further example of the disclosure;
Figures 11A - 11B schematically illustrate respective side views of a suspended platform system related to a wind turbine blade according to one example of the disclosure;
Figure 12 schematically illustrates a control unit of the suspended platform system according to one example of the disclosure;
Figure 13 is a block diagram of a method according to an example of the present disclosure;
Figure 14 schematically illustrates a wind turbine blade post-moulding operation system according to one example of the disclosure;
Figure 15 schematically illustrates a front view of a suspended platform system according to a further example of the disclosure; and
Figure 16 schematically illustrates a plan view of an extendable element of the working platform according to an example of the disclosure.

### DETAILED DESCRIPTION OF EXAMPLES

In these Figures, the same reference signs have been used to designate matching elements.

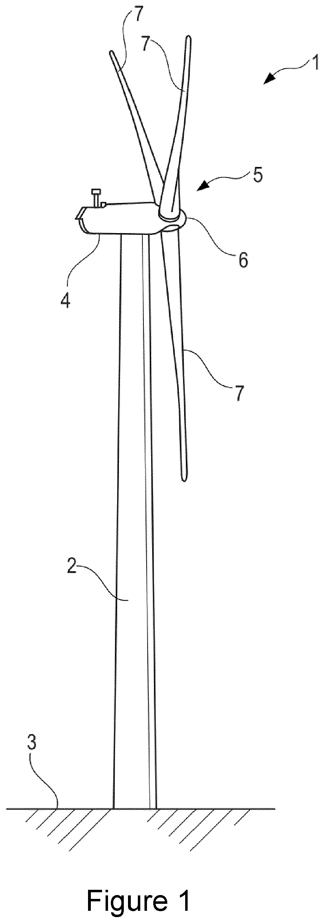

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one rotor blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 positioned within the nacelle 4 or forming part of the nacelle to permit electrical energy to be produced.

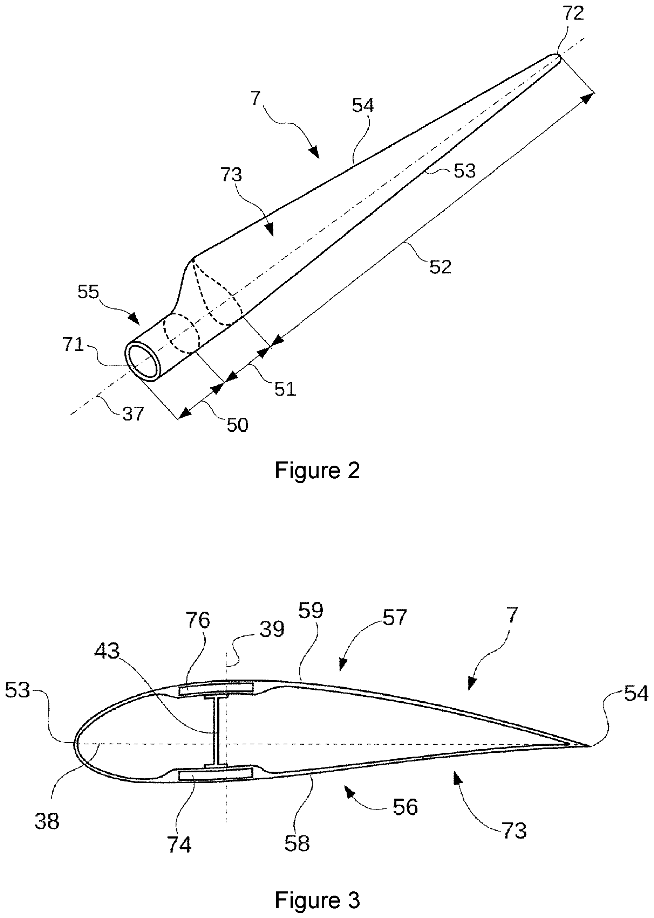

Figure 2 shows a perspective view of a blade root portion of a wind turbine blade 7 according to one example of the present disclosure. The wind turbine blade 7 extends in a longitudinal direction, spanwise direction, or lengthwise direction 37 from a blade root end 71 to a blade tip end 72. The wind turbine blade 7 comprises a blade root region or portion 50 closest to the rotor hub, a profiled or an airfoil portion 52 furthest away from the rotor hub and a transition portion 51 between the blade root portion 50 and the airfoil portion 52. The wind turbine blade 7 comprises a leading edge 53 facing the direction of rotation of the wind turbine blade 7 when mounted on the rotor hub, and a trailing edge 54 facing the opposite direction of the leading edge 53.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure. The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

Figure 3 shows a cross-sectional view of the wind turbine blade according to one example of the present disclosure. A suction side 57 or downwind side, and a pressure side 56 or upwind side extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line or chordwise direction 38.

In this example, the blade shell comprises a lower side blade shell part 58 and an upper side blade shell part 59. The lower side blade shell part 58 may be a pressure side blade shell part. The upper side blade shell part 59 may be a suction side blade shell part. The lower side blade shell part 58 may be joined to the upper side blade shell part 59 along joining lines along the leading edge 53 and the trailing edge 54. Each of these blade shell parts 58, 59 may be manufactured in a mould and then joined together to define the entire blade shell of the wind turbine blade 7. A reinforcing structure is arranged between the lower side blade shell part 58 and the upper side blade shell part 59.

The wind turbine blade 7 comprises a blade structure that provides stiffness to the wind turbine blade. The blade structure of this example comprises the blade shell 73 and a load-carrying structure. In further examples, the blade structure may also comprise a plurality of structural ribs arranged along the length of the blade. In this example, the load-carrying structure comprises a shear web 43. The load-carrying structure of this figure also comprises a pressure side spar cap 74 arranged at the pressure side 56 and a suction side spar cap 76 at the suction side 57.

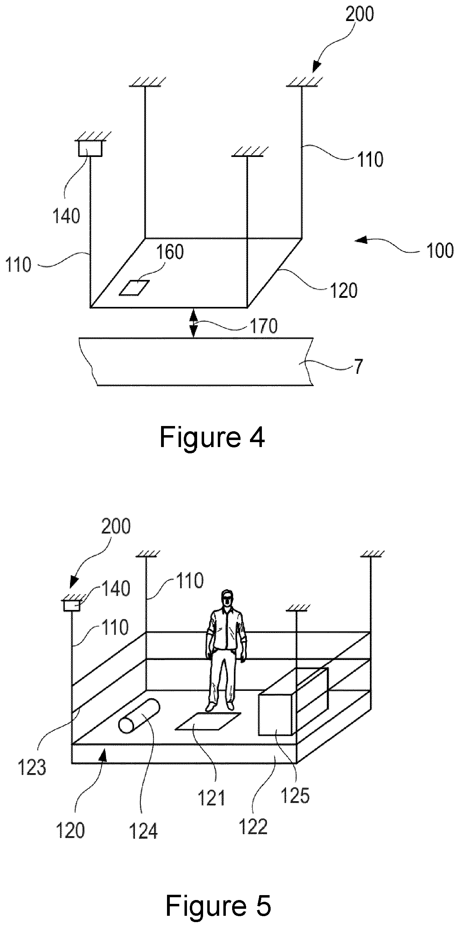

Figure 4 shows a perspective view of a suspended platform system according to one example of the disclosure. The suspended platform system 100 is suitable for carrying out post-moulding operations on a wind turbine blade 7. The suspended platform system 100 may be provided in a post-moulding area in a manufacturing site. Post-moulding operations may comprise, for instance, installing aerodynamic devices or add-on features, repairment of the blade including grinding or sanding, scanning the wind turbine blade and/or finishing operations such as painting the wind turbine blade.

The suspended platform system 100 comprises cables 110 configured to be attached to a structure 200, and a working platform 120 to hold a user. The working platform 120 is suspended by the cables 110 from the structure 200. Cables 110 may comprise a rope, a cord, a line, a wire, a chain, a belt, or the like. In examples, the structure 200 may comprise a ceiling, a wall, or a roof structure of the manufacturing site. In some examples, the structure 200 may comprise a dedicated member provided within the manufacturing site to suspend the working platform 120.

The suspended platform system 100 further comprises a driving system 140 for moving the working platform 120 relative to the structure 200. The suspended platform system 100 also comprises a control unit 160. The control unit 160 is configured to control a movement of the working platform 120 towards a post-moulding position to prevent a distance 170 between the working platform 120 and a surface of the wind turbine blade 7 from being less than a safety distance threshold. The surface may comprise a region of the wind turbine blade 7.

The safety distance threshold may be a predetermined value that may vary depending on the case. The distance 170 is thus maintained equal to or above the safety distance threshold. The movement of the working platform 120 may thus be prevented when the distance 170 is less than the safety distance threshold. Safe operations can be performed in an easier manner.

In some examples, the control unit 160 may be further configured to operate the driving system 140 to move the working platform 120 to the post-moulding operation position while the distance 170 between the working platform 120 and the surface of the wind turbine blade 7 is equal to or greater than a safety distance threshold.

Figure 5 shows a perspective view of the working platform 120 according to an example of the disclosure. In this example, the working platform 120 comprises a base 122 and side closures 123 around the contour of the base 122. Although the illustrated example shows a rectangularly shaped base 122, a different shape may be chosen depending on the case. The base 122 may be made from a metallic material or any other suitable material. This example comprises three side closures 123 but the number may vary. For example, the working platform may comprise four side closures 123 extending along a perimeter of a rectangular-shaped base. The closures 123 may thus prevent a risk of falling.

In the example of Figure 5, the working platform 120 is suspended by four cables 110 that are respectively arranged at each corner of the working platform 120. However, the suspended platform system 100 may comprise a pair of cables 110 arranged at opposite sides of the working platform 120. Therefore, the number of cables 110 may vary according to the circumstances.

As can be seen in Figure 5, a user is carried by the working platform 120. The working platform may be also suitable, for instance, for carrying material 124 to be used on the post-moulding operation and a toolbox 125. The number of users and/or the tools or material 124 may vary depending on the case. The working platform may thus support the user when approaching the wind turbine blade. The working platform may also hold the user when the user is performing a post-moulding operation.

The working platform 120 of the Figure 5 comprises a working gate 121. The working gate 121 is arranged in the base 122. This way, the user may access the surface of the wind turbine blade 7 to perform a post-moulding operation when the working platform 120 is above the surface. The working platform may thus be used to perform different post-moulding operations and/or performing the same post-moulding operations at different locations of the blade.

In some examples, the working platform 120 may comprise an emergency ladder. This emergency ladder may be used to exit the working platform 120 in case of failure.

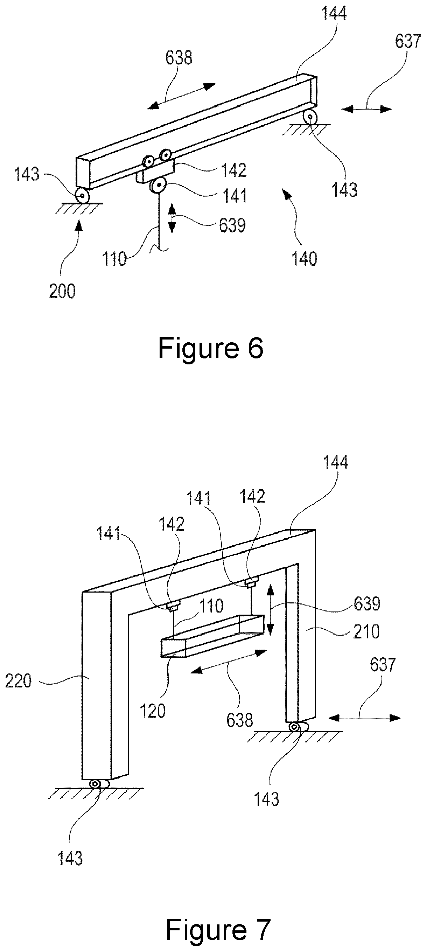

Figures 6 and 7 respectively illustrate a perspective view of a driving system 140 for moving the working platform 120 according to one example of the disclosure.

As can be seen in the examples of Figures 6 and 7, the working platform 120 may be moved relative to structure 200 in at least one direction. In some examples, the driving system 140 may move the working platform in three directions. These three directions may be perpendicular to each other. For example, these three directions may correspond to a longitudinal direction, a transversal direction and a vertical direction.

In some examples, the working platform 120 may be moved in a longitudinal direction 637 substantially parallel to the spanwise direction 37 when the wind turbine blade 7 is provided. The longitudinal direction is substantially horizontal.

In some examples, the working platform 120 may be moved in a transversal direction 638 which is substantially horizontal and perpendicular to the longitudinal direction 637. In the illustrated examples, the transversal direction 638 is substantially parallel to the chordwise direction 38 when the chord line 38 is in a horizontal position.

In some examples, the working platform 120 may be moved in a vertical direction 639 which is substantially perpendicular to the longitudinal direction 637 and to the transversal direction 638. In the illustrated examples, the vertical direction 639 is substantially parallel to the flapwise direction 39 when the flapwise direction 39 is in a vertical or upright position.

In the example of Figure 6, the driving system 140 comprises a configuration similar to a bridge crane or overhead crane. The driving system 140 comprises a hoist 141 engaging one of the cables 110 to move upwards and downwards the working platform 120. The hoist 141 may lift the working platform 120 in the vertical direction 639. The hoist may comprise a drum or lift-wheel around which the cable 110 wraps. The hoist may be manually operated, electrically or pneumatically driven. In this example, the remaining cables are coupled to the cable engaging the hoist 141. An intermediate stabilization structure may be provided to couple the cable engaging the hoist 141 to the remaining cables having an end attached to the working platform. In this example, some of the cables may thus be indirectly attached to the structure.

In further examples, the driving system may comprise a plurality of hoists 141. In some examples, each of these hoists may engage a cable 110. The control unit may operate the hoists 141 to level the working platform. The control unit may thus operate the hoists in a synchronous manner.

The structure 200 in Figure 6 comprises a bridge 144. The hoist 141 is mounted in a trolley 142 that can travel across the bridge 144. Thus, the trolley 142 is movable in the transversal direction 638. The movement of the trolley in the transversal direction 638 may therefore move the hoist 141 and, consequently, the working platform 120 in the transversal direction.

In some examples, the driving system 140 may comprise a plurality of trolleys 142, each of them supporting a hoist 141. The control unit may control the movement of the trolleys along the transversal direction 638. The trolleys 142 may be moved synchronously to move the working platform along the transversal direction 638.

Furthermore, the driving system 140 of Figure 6 comprises a pair of rollers 143 that are positioned under the bridge 144. The bridge 144 may run in the longitudinal direction 637 by operation the rollers 143. The rollers may be driven by an electric motor or the like. Therefore, the working platform 120 may be moved in the longitudinal direction 637.

The structure 200 may comprise a pair of beams for supporting each roller 143. These beams may be roofing beams or beams extending between columns of the manufacturing plant. The bridge 144 may thus be displaced along the pairs of beams to move the working platform in longitudinal direction 637.

In the Figure 7, the driving system 140 comprises a configuration similar to a gantry crane. The driving system 140 of Figure 7 comprises two hoists 141 and two trolleys 142 to travel across the bridge 144. The control unit may be configured to operate the hoists and the trolleys in a synchronous manner. This way, the working platform may be moved stably.

The structure 200 of Figure 7 comprises two legs 210, 220 supporting the bridge 144. The legs 210, 220 may run on the ground level through the rollers 143. The rollers 143 may be driven as mentioned above.

The control unit 160 may be configured to control the operation of at least one of the hoist 141, the trolley 142, and the roller 143 of the examples of Figures 6 and 7.

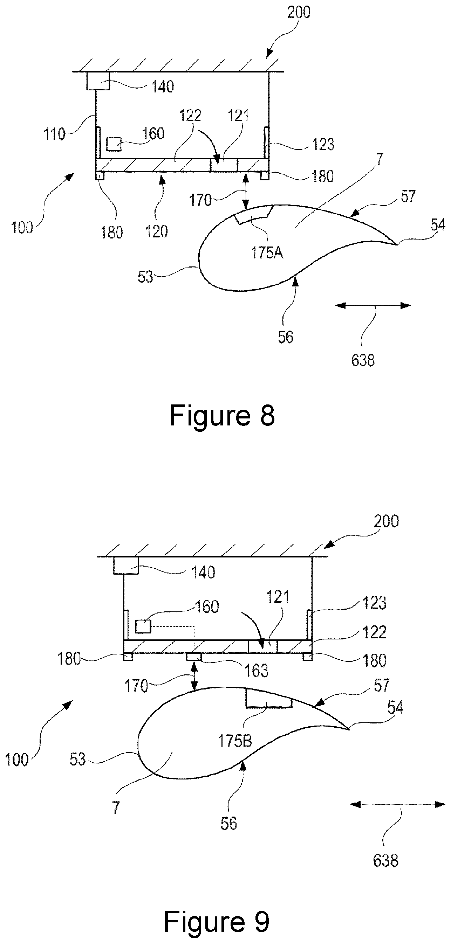

Figures 8, 9, and 10 schematically and respectively illustrate a front view of a suspended platform system 100 in different positions related to a wind turbine blade 7 according to examples of the present disclosure. In these examples, the working platform is in the post-moulding operation position.

In Figures 8, 9 and 10, target zones 175A and/or 175B of the blade are illustrated. The target zone 175A, 175B may comprise a zone of the wind turbine blade 7 where a post-moulding operation may be performed. The control unit 160 may be configured to obtain a post-moulding operation position of the working platform 120 to perform a post-moulding operation on the target zone 175A, 175B of the wind turbine blade 7. When the working platform 120 is provided at the post-moulding operation position the user may easily reach the target zone 175A, 175B and perform the post-moulding operation. Moving the working platform to the post-moulding operation position may comprise moving the working platform in at least one of the longitudinal direction 637, the transversal direction 638, and the vertical direction 639.

In some examples, the post-moulding operation position may be predetermined. For example, the working platform 120 may reach the predetermined post-moulding operation position for a specific post-moulding operation or a particular model of wind turbine blade 7. The control unit 160 may receive the predetermined post-moulding operation position. For example, a user interface device may be used to provide the predetermined post-moulding operation position.

In some examples, obtaining the post-moulding operation position may comprise identifying the target zone 175A, 175B. The target zone 175A, 175B may be identified by checking or inspecting the wind turbine blade 7, e.g. scanning. The target zone 175 may comprise a nonconformity, such as a defect.

The control unit 160 may be configured to obtain a starting position of the working platform 120 and to determine a path from the starting position to the post-moulding operation position. The starting position and the post-moulding operation position may be defined by their respective coordinates or position relative to the longitudinal direction 637, the transversal direction 638 and the vertical direction 639. The control unit 160 may be configured to determine the spatial coordinates or location of the starting position relative to the directions 637, 638 and 639. The control unit may also determine the spatial coordinates or location of the post-moulding operation position relative to the directions 637, 638 and 639.

In the example of Figure 8, the working platform 120 is in the post-moulding operation position. In the post-moulding operation position of this example, a post-moulding operation may be carried out on a target zone 175A of the surface of the wind turbine blade 7. In the example of Figure 9, the working platform 120 has been moved from the post-moulding operation position illustrated in Figure 8 at least in the transversal direction 638. The control unit 160 may be configured to obtain a starting position of the working platform 120, for instance the position illustrated in Figure 8 related to the target zone 175A and to determine a path from the starting position to the post-moulding operation position related to the target zone 175B. The post-moulding operation position of Figure 9 may be used for performing a post-moulding operation on the target zone 175B.

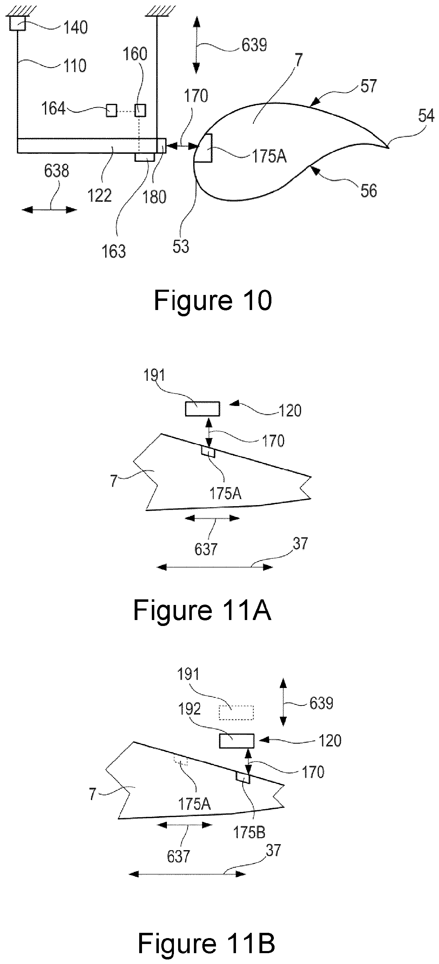

In the examples of Figures 8, 9 the target zone 175A, 175B is arranged at a portion of the suction side 57. However, the working platform 120 may be moved to different post-moulding operation positions. For example, the post-moulding operation position may be suitable for accessing a target zone arranged at any outer surface of the wind turbine blade 7. The target zone may be arranged at any portion of the wind turbine blade 7 such as the pressure side 56, the leading edge 53, the trailing edge 54, the blade root end, or the blade tip end. For instance, in Figure 10 the working platform 120 is positioned in a post-moulding operation position to perform a post-moulding operation on the leading edge 53. The working platform 120 of Figure 10 may be moved in the longitudinal direction 637, and/or the vertical direction 639, and/or the transversal direction 638. As the working platform may move in these directions, the working platform 120 may follow the contour shape of the wind turbine blade, e.g. the contour of the leading edge 53.

In Figures 9 and 10, a distance sensor system 163 has been illustrated. The distance sensor system 163 may be configured to sense the distance 170 between the working platform 120 and the surface of the wind turbine blade.

The distance sensor system 163 may generate an indication related to the sensed distance, such as a measuring sensor or a limit switch. The control unit 160 may be configured to receive the indication of the sensed distance from the distance sensor system 163.

As explained above, the distance sensor system 163 may comprise a measuring sensor. The measuring sensor may comprise an infrared sensor, a LIDAR sensor, an ultrasonic sensor, and/or a laser sensor. The control unit 160 may receive the indication of the sensed distance. The indication may comprise measuring data. The suspended platform system 100 may comprise a transducer and an analogue-digital converter to properly obtain the measuring data from the sensed distance. The control unit 160 may receive the measuring data and compare the measuring data with the predetermined safety distance threshold. If the measuring data satisfies the safety distance threshold, the working platform 120 can still be moved towards the wind turbine blade. Otherwise, the working platform is stopped or prevented from moving.

As explained above, the distance sensor system 163 may comprise a limit switch. In some of these examples, the working platform 120 may comprise a spacer or the like to arrange the limit switch. In this a way, the limit switch is activated when the distance 170 is equal to or greater than a safety distance threshold. The spacer may be sized to position the limit switch at a predetermined safety distance threshold. If the limit switch is activated, the electric signal may be digitally converted to properly obtain the indication of the sensed distance. The control unit 160 may be configured to receive that indication and stop the motion of the working platform 120.

The distance sensor system 163 may comprise both a measuring sensor and a limit switch. Both elements may actuate as a redundant system to increase safety. In further examples, the distance sensor system 163 may comprises a plurality of measuring sensors and/or a plurality of limit switches.

In further examples, the control unit 160 may be configured to obtain the position of the working platform 120 relative to the directions 637, 638 and 639. The control unit 160 may also be configured to check whether the working platform is positioned in a predetermined region around the blade that satisfies the safety distance threshold. In an example, the control unit 160 may receive data related to the speed, direction, and/or position of the working platform. For example, an encoder or the like may be used to sense the motion of the driving parts of the driving system 140, e.g. the roller 143, the hoist 141, and/or the trolley 142. The position of working platform 120 may be obtained based on this data, e.g. from the encoder.

In some examples, the driving system 140 may be manually driven. In this case, the driving system 140 may comprise a pulley. The control unit 160 may be configured to check whether the distance 170 satisfies the safety distance threshold according to any of the examples disclosed herein. If the distance 170 does not meet the safety distance threshold, the control unit 160 may be configured to stop the driving system and prevent the movement of the working platform 120.

In some examples, the driving system 140 may comprise a manually driven pulley and/or a motorized unit. The operation of the manually driven pulley may over-ride the motorized unit.

In the example of Figures 8 and 9, the working platform 120 also comprises the working gate 121 to access the target zones 175A, 175B on the surface of the wind turbine blade 7.

In the examples of Figures 8 - 10, the working platform 120 comprises a bumper 180 attached to the base 122 or the side closure 123. The bumper 180 may be provided along the contour of the base 122 or the side closure 123 or at least a portion of them. The bumper 180 may provide impact protection so as not to damage the wind turbine blade 7. In some examples, the bumper may comprise rubberish elements.

In the example of Figure 10, the suspended platform system 100 comprises a stabilization system 164 to stabilize the working platform 120. The stabilization system 164 may comprise a gyroscope or the like to measure the orientation and angular velocity. The control unit 160 may configured to receive orientation data from the measured orientation and angular velocity. The control unit 160 may configured to operate the driving system 140 to maintain the working platform 120 in a substantially horizontal orientation.

Figures 11A - 11B schematically illustrate respective side views of a suspended platform system 100 at different positions relative to a wind turbine blade 7 according to one example of the disclosure.

In the examples of Figures 11A - 11B, a schematic portion of the wind turbine blade 7 has been represented. In these examples, the wind turbine blade is moved in the longitudinal direction 637. The wind turbine blade may be moved at a predetermined speed.

In Figure 11A, the working platform 120 of suspended platform system 100 is in a first post-moulding operation position 191. Post-moulding operations may be performed at the target zone 175A. In Figure 11B, the working platform 120 is in a second post-moulding operation position 192 to perform post-moulding operations at the target zone 175B. The first post-moulding operation position 191 has been depicted with dashed lines in Figure 11B for the sake of clarity. The working platform may thus be moved from the first post-moulding operation position 191 to the second post-moulding operation position 192. The first post-moulding operation position 191 may thus be regarded as the starting position when the working platform moves to the second post-moulding operation position 192.

As can be seen in both Figures 11A - 11B, the shape of the profile of the wind turbine blade 7 varies in the spanwise direction 37. The control unit 160 may be configured to actuate the driving system to move the working platform in the vertical direction 639 to perform the post-moulding operation on the target zone 175B, i.e. the move the working platform to the second post-moulding operation position. The distance 170 between the working platform 120 and the surface of the wind turbine blade 7 is checked by the control unit 160 to be equal to or greater than the safety distance threshold.

As mentioned above, in the example of Figures 11A - 11B the wind turbine blade 7 moves at a predetermined speed in the spanwise direction 37, i.e. parallel to the longitudinal direction 637. The control unit 160 may be configured to obtain a speed of the wind turbine blade 7 moving during post-moulding operations in the spanwise direction 37. The speed may be sensed by a dedicated sensor or may be a predetermined value. In further examples, the speed may be obtained from a central control unit that manages the post-moulding operations.

Since the control unit 160 may be configured to obtain the speed of the wind turbine blade 7, the control unit 160 may determine the path between the first post-moulding operation position 191 and the post-moulding operation second position 192 to maintain the distance 170 while the wind turbine blade 7 moves. The control unit 160 may thus consider the speed and the trajectory of the wind turbine blade and the distance 170 between the working platform 120 and the wind turbine blade. The working platform 120 may move at a predetermined time, e.g. when a specific portion of the blade reaches a specific position in the longitudinal direction 637. The speed may be taken into account to determine the time when the working platform 120 is moved to the post-moulding operation position. The speed may be also considered by the control unit 160 to operate the driving system 140 to keep the working platform 120 stationary relative to the wind turbine blade 7 in motion, i.e. to move the working platform and the blade together.

Moreover, the control unit 160 may be configured to move the working platform 120 together with the wind turbine blade 7 during post-moulding operations, in a direction parallel to the spanwise direction 37. This way, the user may perform de post-moulding operation while the wind turbine blade moves in the spanwise direction 37. The wind turbine blade 7 may be moved using dedicated blade supports that may be operated by the control unit 160 or by an external control unit. In some examples, moving the wind turbine blade 7 may comprise rotating the wind turbine blade 7 about the spanwise direction 37.

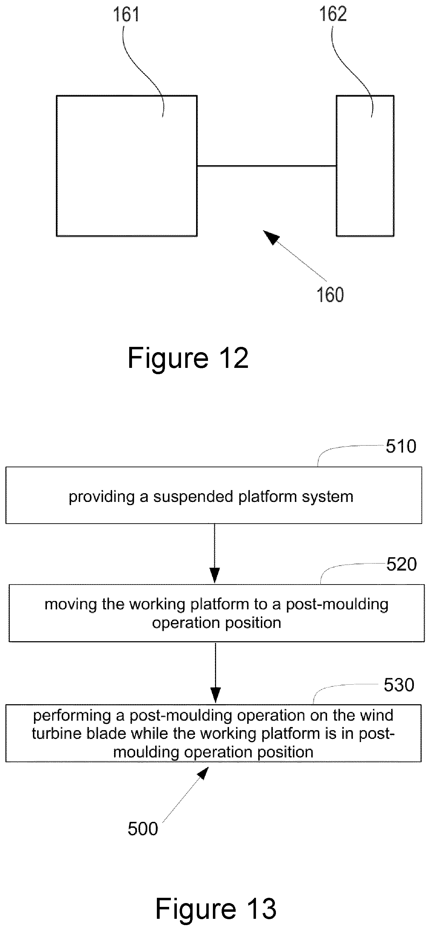

Figure 12 schematically illustrates a control unit 160 of the suspended platform system according to one example of the disclosure. The control unit 160 of this example comprises a controller 161. The controller 161 may be a processor, a chip, a computational device, or processing resources that executes sequences of machine-readable instructions contained in a memory. The controller 161 performs operations on data. The memory may be a non-transitory machine-readable storage medium 162. As can be seen in Figure 12, the non-transitory machine-readable storage medium 162 is coupled to the controller 161. Examples of a non-transitory machine-readable storage medium may include a memory device, a floppy disk, a compact disk (CD), a digital versatile disk (DVD), a USB drive, a computer memory, a read-only memory, or other devices that may store computer code.

The machine-readable instructions may be carried on a carrier signal such as an electrical or optical carrier signal.

The machine-readable instructions may comprise a computer program(s) in the form of source code, object code, a code intermediate source, and object code such as in partially compiled form, or in any other form suitable for use in implementing the methods according to the present disclosure.

The control unit 160 may be configured to receive input through a user interface. The input may comprise the machine-readable instructions related to the movement of the working platform 120.

In some examples, the movement of the working platform 120 may be commanded by the user. In this case, the control unit 160 is configured to operate the driving system 140 under the command of the user. The working platform 120 can be moved while the distance 170 is equal to or greater than the safety distance threshold. If the control unit 160 receives a command from the user interface to move the working platform to a position which involves a distance 170 less than the safety distance threshold, then the control unit 160 can stop or prevent the movement. A command of the user may over-ride the operation of the driving system 140.

The control unit 160 may be arranged along with any parts of the suspended platform system 100 such as the working platform 120, or the driving system 140. However, the control unit 160 may be remotely arranged from the rest of the components of the suspended platform system 100, for instance, the control unit 160 may be arranged in a control room environment.

Figure 13 is a block diagram of a method 500 according to an example of the present disclosure. A suspended platform system 100 according to any of the examples herein may be used in the method 500.

At block 510, providing a suspended platform system 100 according to any of examples herein, is represented.

The method 500 further comprises moving the working platform 120 to a post-moulding operation position while a distance 170 between the working platform 120 and a surface of a wind turbine blade is equal to or greater than a safety distance threshold, as represented at block 520. The method 500 may further comprise receiving an indication of a distance between the working platform 120 and the wind turbine blade. The control unit 160 may receive the indication and may control the movement of the working platform 120.

At block 530, performing the post-moulding operation on the wind turbine blade while the working platform is in the post-moulding operation position, is represented. The post-moulding operation may be performed in a target zone 175A, 175B. The post-moulding operation may be performed by the user or by a suitable robot. The post-moulding operation may be performed from the working platform 120. Post-moulding operations may comprise, for instance, installing aerodynamic devices or add-on features, repairment of the blade including grinding or sanding, scanning the wind turbine blade and/or finishing operations such as painting the wind turbine blade.

If the post-moulding operation is performed by a user, the method 500 may comprise accessing the user to the working platform 120.

In some examples, the method 500 may comprise moving the working platform 120 in a longitudinal direction. Therefore, the working platform 120 may move to allow performing post-moulding operations at different locations of the wind turbine blade 7.

When the method 500 comprises moving the wind turbine blade in a direction parallel to the spanwise direction 37, the method may comprise obtaining a speed of movement of the wind turbine blade. The control unit 160 may be configured to obtain this speed.

If the wind turbine blade 7 is moved in a direction parallel to the spanwise direction, the method 500 may comprise moving together the working platform 120 and the wind turbine blade. This may allow performing post-moulding operations on the wind turbine blade while the wind turbine blade is moving. The method may thus allow increasing the versatility of performing post-moulding operations.

The method 500 may further comprise moving the working platform 120 in a horizontal direction perpendicular to the spanwise direction such as the transversal direction 638. This movement may be related to the example illustrated in Figures 8 and 9.

In some examples, the method 500 may comprise moving the working platform 120 in the vertical direction 639. This movement may be related to the example illustrated in Figures 10, 11A, and 11B.

In some examples, moving the working platform 120 to a post-moulding operation position while a distance 170 between the working platform 120 and a surface of a wind turbine blade is equal to or greater than a safety distance threshold, may comprise preventing a motion of the working platform 120 if the distance between the working platform 120 and the wind turbine blade 7 from being less than a safety distance threshold. The control unit 160 may check whether the distance 170 is equal to or greater than the safety distance threshold. The movement of the working platform 120 may be prevented when the distance 170 is less than the safety distance threshold.

The method 500 may further comprise obtaining a post-moulding operation position of the working platform 120 to perform a post-moulding operation on a target zone 175A, 175B of the wind turbine blade.

The obtaining the post-moulding operation position of the working platform 120 may comprise identifying the target zone 175A, 175B. The wind turbine blade 7 may be inspected after moulding. As a result, nonconformities, such as defects, may be identified and located. The position of the nonconformity may be reached from the working platform 120 when the working platform 120 is in the post-moulding position.

The method 500 may further comprise obtaining a starting position of the working platform 120 and determining a path from the starting position to the post-moulding operation position. The control unit 160 may compute the path, for instance, from the spatial coordinates of the starting position relative to directions 637, 638, 639 to the spatial coordinates of the post-moulding operation position relative to directions 637, 638, 639 to allow performing the post-moulding operation while satisfying the safety distance threshold.

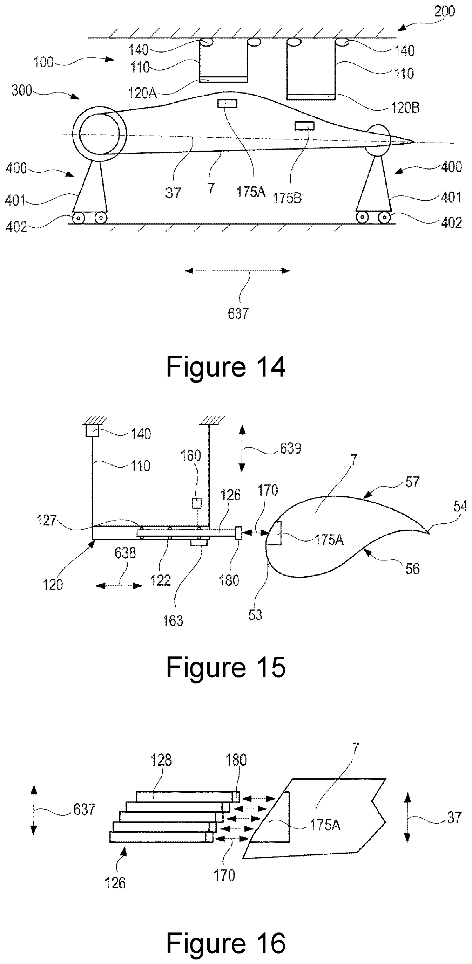

Figure 14 schematically illustrates a wind turbine blade post-moulding operation system 300 according to one example of the disclosure.

The wind turbine blade post-moulding operation system 300 comprises a suspended platform system 100 according to any of the examples herein, and a blade support 400 to support the wind turbine blade 7. The wind turbine blade post-moulding operation system 300 of Figure 14 comprises a plurality of suspended platform systems 100 to perform post-moulding operations at different locations of the wind turbine blade 7. Each of the suspended platform systems 100 may comprise a control unit 160. In other examples, a single control unit 160 may be configured to control the plurality of suspended platform system.

The suspended platforms systems 100 of Figure 14 comprise driving systems 140 according to any of the examples disclosed herein, for instance, the examples illustrated in Figures 6 and 7.

The blade support 400 may be movable to move the wind turbine blade 7 in a direction parallel to the spanwise direction 37. For example, the wind turbine blade 7 may be moved at a predetermined speed. The post-moulding operations may be performed while the wind turbine blade 7 moves. The blade support 400 comprises a blade carriage 401 to hold the wind turbine blade and a wheel 402 to move the blade carriage 401. In the illustrated example, the wind turbine blade post-moulding operation system 300 comprises two blade supports 400. Each of the blade supports 400 is positioned at different points along the wind turbine blade 7 in a spanwise direction 37.

In examples, the blade support 400 may be movable in some other directions such as a direction perpendicular to the spanwise direction 37. This way, the blade support may be moved sideways with respect to the spanwise direction 37. The wheels may be also operated to turn around the blade support.

In some examples, the control unit 160 may be configured to obtain different paths for each working platform 120. The path followed by working platform 120 may be different from the paths of the rest of the working platforms 120. Therefore, each of the working platforms 120 may move independently from the rest of the working platforms 120. Each working platform 120 may move in different directions 637, 638, 639 to reach the post-moulding operation position related to the target zone 175A and/or 175B.

In this example, the first working platform 120A is positioned at a post-moulding operation position to perform post-moulding operations at the target zone 175A. The second working platform 120B is positioned in a post-molding operation position to perform post-moulding operations at the target zone 175B.

In the example of Figure 14, the first working platform 120A and the second working platform 120B are suspended from the structure 200 of the manufacturing plant. The structure 200 may comprise the structural beams of the manufacturing plant.

As can be seen in Figure 14, each working platform 120A, 120B is provided at different heights following the contour of the wind turbine blade 7 along the spanwise direction 37. The working platforms 120A, 120B may be spaced apart to perform post-moulding operations at different locations of the wind turbine blade. Each working platform 120A, 120B is thus positioned to keep the distance 170 between the working platform 120 and the surface of the wind turbine blade 7 equal or greater than the safety distance threshold.

Figure 15 schematically illustrates a front view of a suspended platform system according to a further example of the disclosure. The working platform 120 of Figure 15 comprises an extendable element 126. The extendable element 126 is configured to protrude from the rest of the working platform 120 in a longitudinal direction 637 and/or a transversal direction 638. The extendable element 126 may be substantially received or covered by the base 122 in a retracted position. The extendable element 126 may project from the base 122 in a deployed or extended position. The extendable element 126 may extend out towards the wind turbine blade 7. The operator may stand on the extendable element 126 in a deployed position. In this way, the operator may get closer to the wind turbine blade 7 that is to be worked on, for instance, to the target zone 175A.

In the example of Figure 15 the extendable element 126 is slidably attached to the rest of the working platform 120. However, the extendable element 126 may be hingedly attached to the rest of the working platform 120. The extendable element 126 may be driven by an electric motor from a retracted position to a deployed position. The operation of the electric motor may be controlled by the control unit 160.

In the deployed position, as illustrated in Figure 15, the extendable element 126 can move into the base 122 to the retracted position or can extend out to the deployed position. In the example of Figure 15, the extendable element 126 can move in the transversal direction 638. However, the extendable element 126 may move in the longitudinal direction 637. The working platform 120 may comprise bearings 127 to allow the extendable element 126 to slide.

In the case of the extendable element 126 hingedly attached to the rest of the working platform 120, the extendable element 126 may rotate about the hinge from the retracted position on the base 122 to the deployed position.

In some examples, the control unit 160 may be configured to check whether the distance 170 between the extendable element 126 in a deployed position and the surface of the wind turbine blade 7 is equal to or greater than the safety distance threshold. The control unit 160 may be configured to prevent a distance between the deployment of the extendable element 126 and the surface of the blade from being less than the safety distance threshold. The control unit 160 may be configured to prevent a further deployment of the extendable element 126 to limit the extent of deployment to prevent the distance 170 from being less than the safety distance threshold.

The control unit 160 may be configured to control deployment of the extendable element 126 to a predetermined extent.

The control unit 160 may be configured to operate the driving system 140 to move the working platform 120 while the distance 170 between the extendable element 126 in a deployed position and the surface of the wind turbine blade 7 is equal or greater than the safety distance threshold.

The extendable element 126 may comprise a bumper 180 to absorb any unwanted impact to the wind turbine blade 7.

Figure 16 schematically illustrates a plan view of an extendable element 126 of the working platform according to an example of the disclosure. The extendable element 126 in Figure 16 comprises a plurality of slats 128. The slats are arranged side by side when seen from above. The control unit 160 may be configured to control the movement of each slat 128 in such a way that the distance 170 between each slat 128 and the surface of the wind turbine blade 7 satisfies the safety distance threshold.

As can be seen in Figure 16, each of the plurality of slats 128 protrudes from the working platform 120 to a different extent. The slats 128 can be arranged independently from each other in the deployed position. In this way, the extendable element 126 may follow, for instance, the contour of a portion the wind turbine blade 7. The contour may comprise the contour of the wind turbine blade 7 along the spanwise direction 37.

The plurality of slats 128 illustrated in Figure 16 are in the deployed position. The slats 128 are arranged in such a way that the operator may be allowed to stand on the extendable element formed by the slats. In this way, the operator may get closer in an even more accurate way to the wind turbine blade 7 that is to be worked on. The extendable element 126 may accurately follow a variable shape of the surface of the wind turbine blade.

The size and number of slats 128 may vary depending on the case.

In some examples, when the working platform 120 comprises the extendable element 126, the method 500 may comprise deploying the extendable element while the distance 170 between the extendable element 126 in a deployed position and the surface of the wind turbine blade is equal to or greater than the safety distance threshold.

In some examples, when the working platform 120 comprises the extendable element 126, the method 500 may comprise moving the working platform 120 to a post-moulding operation position while the distance 170 between the extendable element 126 in a deployed position and the surface of the wind turbine blade is equal to or greater than the safety distance threshold.

For reasons of completeness, various aspects of the present disclosure are set out in the following numbered clauses:
Clause 1. A suspended platform system for post-moulding operations on a wind turbine blade, comprising:
   cables configured to be attached to a structure;
   a working platform to hold a user, wherein the working platform is suspended by the cables from the structure;
   a driving system for moving the working platform relative to the structure;
   a control unit configured to control a movement of the working platform towards a post-moulding position to prevent a distance between the working platform and a surface of the wind turbine blade from being less than a safety distance threshold.
Clause 2. The suspended platform system according to clause 1, wherein the control unit is further configured to operate the driving system to move the working platform to the post-moulding operation position while the distance between the working platform and the surface of the wind turbine blade is equal to or greater than a safety distance threshold.
Clause 3. The suspended platform system according to any of clauses 1 - 2, comprising:
   a distance sensor system to sense a distance between the working platform and the surface of the wind turbine blade, wherein the control unit is configured to receive an indication of the sensed distance from the distance sensor system.
Clause 4. The suspended platform system according to clause 3, wherein the distance sensor system comprises a measuring sensor.
Clause 5. The suspended platform system according to any of clauses 3-4, wherein the distance sensor system comprises a limit switch.
Clause 6. The suspended platform system according to any of clauses 1-5, wherein the control unit is configured to obtain a post-moulding operation position of the working platform to perform a post-moulding operation on a target zone of the wind turbine blade.
Clause 7. The method according to clause 6, wherein to obtain a post-moulding operation position comprise to identify the target zone.
Clause 8. The suspended platform system according to any of clauses 6-7, wherein the control unit is configured to obtain a starting position of the working platform, and to determine a path from the starting position to the post-moulding operation position.
Clause 9. The suspended platform system according to any of the clauses 1 - 8, wherein the working platform comprises a base and side closures around the contour of the base.
Clause 10. The suspended platform system according to clause 9, wherein the working platform comprises a working gate to access the surface of the wind turbine blade.
Clause 11. The suspended platform system according to any of clauses 9-10, wherein the working platform comprises a bumper attached to the base or the side closure.
Clause 12. The suspended platform system according to any of the clauses 1-11, comprising a pair of cables arranged at opposite sides of the working platform.
Clause 13. The suspended platform system according to any of the clauses 1 - 12, comprising four cables respectively arranged at each corner of the working platform.
Clause 14. The suspended platform system according to any of the clauses 1 - 13, wherein the driving system comprises a hoist engaging one of the cables to move upwards and downwards the working platform.
Clause 15. The suspended platform system according to clause 14, wherein the hoist is mounted in a trolley movable in a transversal direction.
Clause 16. The suspended platform system according to clause 15, wherein the driving system comprises a pair of rollers to move the working platform in a longitudinal direction.
Clause 17. The suspended platform system according to any of the clauses 1 - 16, comprising a stabilization system to stabilize the working platform.
Clause 18. The suspended platform system according to any of the clauses 1-17, wherein the control unit is configured to:
   obtain a speed of the wind turbine blade moving during post-moulding operations in a direction parallel to the spanwise direction.
Clause 19. The suspended platform system according to clause 18, wherein the control unit is configured to:
   move the working platform together with the wind turbine blade during post-moulding operations, in a direction parallel to the spanwise direction.
Clause 20. The suspended platform system according to any of the clauses 1-19, wherein the working platform comprises an extendable element configured to protrude from the rest of the working platform in a longitudinal direction and/or a transversal direction.
Clause 21. The suspended platform system according to clause 20, wherein the control unit is configured to operate the driving system to move the working platform while the distance between the extendable element in a deployed position and the surface of the wind turbine blade is equal or greater than the safety distance threshold.
Clause 22. The suspended platform system according to any of the clauses 20 - 21, wherein the extendable element in a deployed position comprises a plurality of slats arranged side by side.
Clause 23. The suspended platform system according to clause 22, wherein each of the plurality of slats is configured to be driven in such a way that each slat protrudes from the working platform to a different extent from the rest of the slats.
Clause 24. The suspended platform system according to any of the clauses 22 - 23, wherein the control unit is configured to control the movement of each slat in such a way that the distance between each slat in a deployed position and the surface of the wind turbine blade satisfies the safety distance threshold.
Clause 25. A method comprising:
   providing a suspended platform system according to any of clauses 1 - 24;
   moving the working platform to a post-moulding operation position while a distance between the working platform and a surface of a wind turbine blade is equal to or greater than a safety distance threshold;
   performing the post-moulding operation on the wind turbine blade while the working platform is at the post-moulding operation position.
Clause 26. The method according to clause 25, comprising:
   accessing a user to the working platform.
Clause 27. The method according to any of clauses 25 - 26, wherein post-moulding operation is performed from the working platform.
Clause 28. The method according to any of clauses 25 - 27, comprising:
   moving the working platform in a longitudinal direction.
Clause 29. The method according to any of clauses 25 - 28, comprising:
   moving the working platform in a transversal direction.
Clause 30. The method according to any of clauses 25 - 29, comprising:
   moving the working platform in a vertical direction.
Clause 31. The method according to any of clauses 25 - 30, comprising:
   receiving an indication of a distance between the working platform and the wind turbine blade.
Clause 32. The method according to any of clauses 25 - 31, wherein moving the working platform to a post-moulding operation position comprises:
   preventing a motion of the working platform if the distance between the working platform and the wind turbine blade from being less than a safety distance threshold.
Clause 33. The method according to any of clauses 25 - 32, comprising:
   moving the wind turbine blade in a direction parallel to the spanwise direction.
Clause 34. The method according to clause 33, comprising:
   obtaining a speed of movement of the wind turbine blade in a direction parallel to the spanwise direction.
Clause 35. The method according to any of clauses 33 - 34, comprising:
   moving together the working platform and the wind turbine blade.
Clause 36. The method according to any of clauses 25 - 35, comprising:
   obtaining a post-moulding operation position of the working platform to perform a post-moulding operation on a target zone of the wind turbine blade.
Clause 37. The method according to clause 36, wherein the obtaining the post-moulding operation position of the working platform comprises identifying the target zone.
Clause 38. The method according to any of clauses 25 - 37, comprising:
   obtaining a starting position of the working platform;
   determining a path from the starting position to the post-moulding operation position.
Clause 39. The method according to any of clauses 25 - 38, wherein the working platform comprises an extendable element, the method comprising:
   deploying the extendable element while the distance between the extendable element and the surface of the wind turbine blade is equal to or greater than the safety distance threshold.
Clause 40. The method according to clause 39, comprising:
   moving the working platform to a post-moulding operation position while the distance between the extendable element and the surface of the wind turbine blade is equal to or greater than the safety distance threshold.
Clause 41. A wind turbine blade post-moulding operation system:
   a suspended platform system according to any of clauses 1 - 24;
   a blade support to support the wind turbine blade.
Clause 42. The wind turbine blade post-moulding operation system according to clause 41, wherein the blade support is movable to move the wind turbine blade in a direction parallel to the spanwise direction.
Clause 43. The wind turbine blade post-moulding operation system according to any of clauses 41 - 42, comprising a plurality of suspended platform systems to perform post-moulding operations at different locations of the wind turbine blade.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A suspended platform system (100) for post-moulding operations on a wind turbine blade (7), comprising:
cables (110) configured to be attached to a structure (200);
a working platform (120) to hold a user, wherein the working platform (120) is suspended by the cables (110) from the structure (200);
a driving system (140) for moving the working platform (120) relative to the structure (200);
a control unit (160) configured to control a movement of the working platform (120) towards a post-moulding position to prevent a distance (170) between the working platform (120) and a surface of the wind turbine blade (7) from being less than a safety distance threshold.

2. The suspended platform system (100) according to claim 1, wherein the control unit (160) is further configured to operate the driving system (140) to move the working platform (120) to the post-moulding operation position while the distance (170) between the working platform (120) and the surface of the wind turbine blade (7) is equal to or greater than a safety distance threshold.

3. The suspended platform system (100) according to any of claims 1 - 2, comprising:
a distance sensor system (163) to sense a distance (170) between the working platform (120) and the surface of the wind turbine blade, wherein the control unit (160) is configured to receive an indication of the sensed distance from the distance sensor system (163).

4. The suspended platform system (100) according to any of claims 1 - 3, wherein the control unit (160) is configured to obtain a post-moulding operation position of the working platform (120) to perform the post-moulding operation on a target zone (175) of the wind turbine blade.

5. The suspended platform system (100) according to claim 4, wherein to obtain a post-moulding operation position comprises identifying the target zone (175).

6. The suspended platform system (100) according to any of claims 4 - 5, wherein the control unit (160) is configured to obtain a starting position of the working platform (120) and to determine a path from the starting position to the post-moulding operation position.

7. The suspended platform system (100) according to any of the claims 1 - 6, wherein the control unit (160) is configured to:
obtain a speed of the wind turbine blade moving during post-moulding operations in a direction parallel to a spanwise direction.

8. The suspended platform system (100) according to claim 7, wherein the control unit (160) is configured to:
move the working platform (120) together with the wind turbine blade (7) during post-moulding operations, in a direction parallel to the spanwise direction.

9. A method (500) comprising:
providing (510) a suspended platform system (100) according to any of claims 1 - 8;
moving (520) the working platform (120) to a post-moulding operation position while a distance (170) between the working platform (120) and a surface of a wind turbine blade is equal or greater than a safety distance threshold;
performing (530) a post-moulding operation on the wind turbine blade while the working platform is in the post-moulding operation position.

10. The method according to claim 9, comprising:
receiving an indication of a distance between the working platform (120) and the wind turbine blade (7).

11. The method according to any of claims 9 - 10, wherein moving (520) the working platform (120) to a post-moulding operation position comprises:
preventing a motion of the working platform (120) if the distance between the working platform (120) and the wind turbine blade (7) from being less than a safety distance threshold.

12. The method according to any of claims 9 - 11, comprising:
moving the wind turbine blade in a direction parallel to a spanwise direction (37).

13. The method according to claim 12, comprising:
obtaining a speed of movement of the wind turbine blade in a direction parallel to the spanwise direction (37).

14. The method according to any of claims 12 - 13, comprising:
moving together the working platform (120) and the wind turbine blade.

15. A wind turbine blade post-moulding operation system (300):
a suspended platform system (100) according to any of claims 1 - 8;
a blade support (400) to support the wind turbine blade 7.
